Europäisches Patentamt

European Patent Office

Office européen des brevets

(19)

(11) EP 0 593 532 B1

(12) FASCICULE DE BREVET EUROPEEN

(45) Date de publication et mention
de la délivrance du brevet:
**28.02.1996 Bulletin 1996/09**

(21) Numéro de dépôt: **92913355.1**

(22) Date de dépôt: **26.06.1992**

(51) Int Cl.⁶: **G01S 15/89**

(86) Numéro de dépôt international:
**PCT/FR92/00593**

(87) Numéro de publication internationale:
**WO 93/01505 (21.01.1993 Gazette 1993/03)**

(54) **SYSTEME D'EXPLORATION DES FONDS MARINS**

SYSTEM FÜR EXPLORATION DES MEERESBODENS

SEABED EXPLORATION SYSTEM

(84) Etats contractants désignés:
**DE GB**

(30) Priorité: **09.07.1991 FR 9108608**

(43) Date de publication de la demande:
**27.04.1994 Bulletin 1994/17**

(73) Titulaire: **THOMSON-CSF**
**F-75008 Paris (FR)**

(72) Inventeurs:
• DUTHOIT, François-Marie
  **F-92402 Courbevoie Cédex (FR)**
• VERNET, Jean-Louis
  **F-92402 Courbevoie Cédex (FR)**
• LE PARQUIER , Guy
  **F-92045 Courbevoie Cédex (FR)**

(74) Mandataire: **Desperrier, Jean-Louis et al**
**F-92402 Courbevoie Cédex (FR)**

(56) Documents cités:
EP-A- 0 332 775        WO-A-90/09600
US-A- 4 924 448        US-A- 4 975 887

## Description

L'invention se rapporte au domaine de l'exploration des fonds marins en vue d'en obtenir une image acoustique, et a plus particulièrement pour objet un système d'exploration des fonds marins.

Pour rechercher les zones caractéristiques dans une image, opération que l'on appelle "classification d'une image", il est nécessaire d'obtenir des images haute résolution, c'est-à-dire ayant une résolution d'une à quelques dizaines de centimètres environ. Pour cela, il est connu de remorquer à une altitude de quelques mètres au-dessus du fond un "poisson" muni d'un sonar latéral fournissant, au fur et à mesure de l'avancement, deux images rectangulaires de chaque côte du "poisson". On trouvera une description de tels systèmes, par exemple dans les brevets US 3 950 723 et US 4 199 746.

Lorsqu'il s'agit d'effectuer l'imagerie de zones susceptibles de comporter des mines posées sur le fond, il est en outre essentiel que la sécurité du bâtiment naval soit assurée ; cela peut être obtenu par son éloignement de la zone visualisée. Un des moyens pour garantir le mieux la sécurité est alors d'utiliser un sonar situé à l'avant du bâtiment et de détecter dans une zone située le plus en avant possible par rapport à l'axe de marche du bâtiment, à une distance suffisante.

Dans le cas des sonars frontaux montés sur le chasseur lui-même, il n'est pas possible d'atteindre la résolution voulue car soit la fréquence est trop basse pour obtenir la portée nécessaire, soit l'antenne de réception est de dimensions trop importantes.

Dans une solution connue, pour concilier ces deux impératifs, un "poisson", non plus remorqué mais autopropulsé se déplace devant le bateau auquel il est relié généralement par un câble non porteur où transitent les signaux du sonar et l'énergie nécessaire à la propulsion. On a alors un système sonar émission et réception qui est entièrement porté par le véhicule autopropulsé. Un tel système risque d'être détruit par les mines, ce qui est un premier inconvénient. Un deuxième inconvénient est la nécessité d'une transmission de signaux du sonar par le câble et donc la nécessité d'une liaison physique entre le poisson autopropulsé et le bâtiment principal.

Par ailleurs, il se développe de plus en plus l'utilisation de véhicules sous-marins non habités dotés d'une autonomie croissante, désignés sous le nom de ROV en anglo-saxon (Remote Operating Vehicle). Ils sont conçus pour être programmés en vue d'une mission particulière. Ils comportent en général un fil de liaison appelé "ombilical" destiné à être relié au bateau et par lequel transitent les données.

L'invention a pour objet un système d'exploration de fonds marins permettant d'explorer ces fonds, minimisant les risques pour le bâtiment principal en utilisant un véhicule autonome commandé à distance, ne comportant qu'une charge minimale du fait qu'il ne porte qu'une partie des circuits sonar. Pour cela, le véhicule autonome, avantageusement sans fil de liaison, ne porte que les circuits et l'antenne d'émission, le bâtiment principal portant les circuits de réception, l'ensemble portant un sonar bistatique.

Selon l'invention, un système d'exploration des fonds marins comportant un véhicule sous-marin autonome comportant des moyens d'émission sonar, associé à un bâtiment naval principal, est caractérisé en ce que les moyens d'émission sonar sur le véhicule autonome comportent une antenne d'émission et un ensemble de circuits électroniques couplés à l'antenne pour former une émission multivoies directives et codées dans un secteur gisement insonifié,

et en ce que des moyens de réception sont portés par le bâtiment principal et comportent des moyens de détection pour former une voie de réception spécialisée à lobe large en gisement couplée à un ensemble de circuits de réception comportant des moyens de séparation des codes reçus.

En plus de la suppression des inconvénients déjà cités, on obtient par rapport au sonar latéral monté sur un véhicule les avantages suivants :

- utilisation possible en coopération avec le sonar détecteur de coque existant : le système constitue une option pour faire de la classification,
- possibilité de faire du point fixe,
- en présence d'un objet sur le fond, présence de deux ombres portées suivant deux directions différentes (zone non insonifiée par l'émetteur, zone non vue par le récepteur), ce qui augmente les chances de détection.

L'invention sera mieux comprise et d'autres caractéristiques apparaîtront à l'aide de la description qui suit, en référence aux figures annexées :

- Les figures 1 et 2 illustrent le système d'exploration des fonds marins selon l'invention, respectivement en projection sur un plan vertical et sur un plan horizontal ;
- La figure 3 illustre les circuits d'émission portés par le véhicule autonome ;
- La figure 4 illustre les circuits de réception portés par le bâtiment principal.

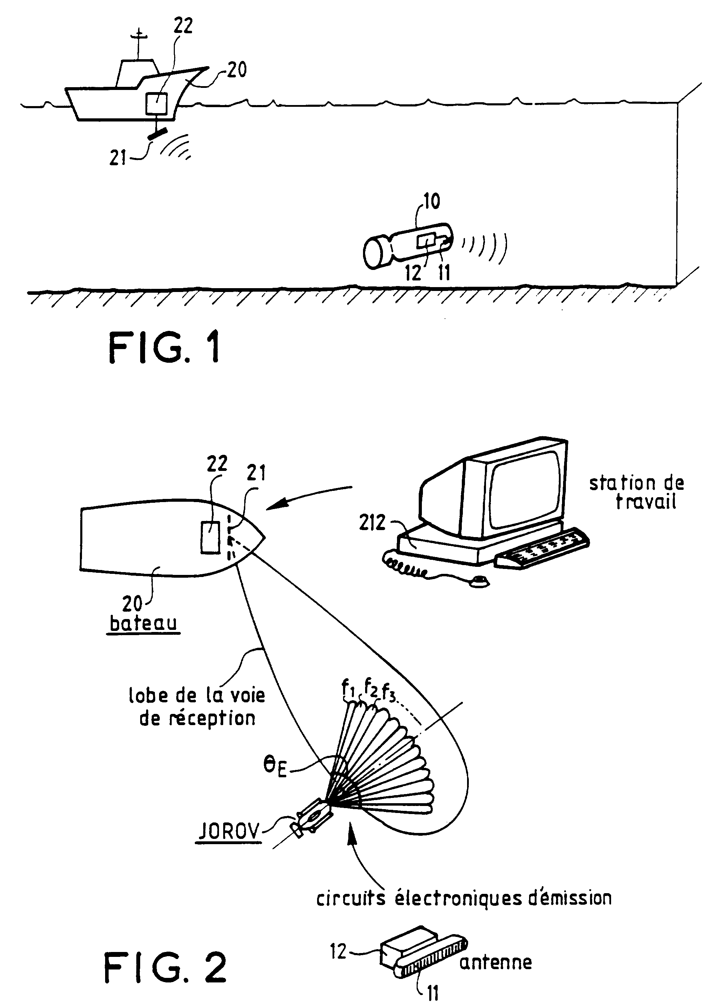

Le système comporte, comme illustré sur les figures 1 et 2 en projection respectivement sur un plan vertical et sur un plan horizontal,

- un véhicule autonome commandé à distance (ROV) 10, avec une antenne d'émission 11 formée de plusieurs transducteurs acoustiques et un ensemble de circuits électroniques d'émission 12 qui met en oeuvre la formation des voies et le codage,
- sur le bateau 20, une antenne de réception 21 et un ensemble de circuits électroniques 22 qui met en oeuvre la séparation des codes reçus dans la voie de réception, associés à un e station de travail.

L'ensemble de ces moyens contribue à réaliser un sonar bistatique, c'est-à-dire dans lequel les moyens d'émission et de réception sont éloignés, dont on trouvera une théorie dans l'ouvrage de Y.T. Chan, Underwater Acoustic Data Processing, NATO ASI Series Juillet 1988, vol. 161 pages 3-24. Le brevet US 4 654 835 décrit une réalisation particulière d'un sonar bistatique classique que l'on peut qualifier de sonar bistatique vertical, l'émission et la réception se faisant en des points ayant quasiment les mêmes coordonnées dans un plan horizontal.

L'antenne d'émission 11 est située sur l'avant du ROV perpendiculairement à son axe d'avancée. La direction d'émission de la voie centrale fait avec l'axe central du lobe de réception un angle quelconque sauf 180° mais préférentiellement compris entre -90° et +90°. En effet, le bateau et le ROV ne peuvent se faire face, car dans ce cas tous les trajets acoustiques sont voisins, ce qui interdit la formation de l'image.

Cette antenne 11 portée par le véhicule autonome commandé à distance est formée de transducteurs acoustiques par exemple alignés et équidistants ; la distance entre transducteurs est choisie pour rejeter les lobes images en dehors du secteur insonifié utile (en effet, ceux-ci ne pourraient être séparés à la réception).

Cette antenne forme des voies de manière qu'à chaque voie corresponde une fréquence émise particulière. Pour cela chaque transducteur reçoit successivement N fréquences, N étant le nombre de voies, et chaque fréquence est affectée pour chaque transducteur d'un déphasage fonction de la direction de la voie à former à cette fréquence. Par voie, donc par fréquence, les déphasages des signaux des transducteurs suivent une loi prédéfinie.

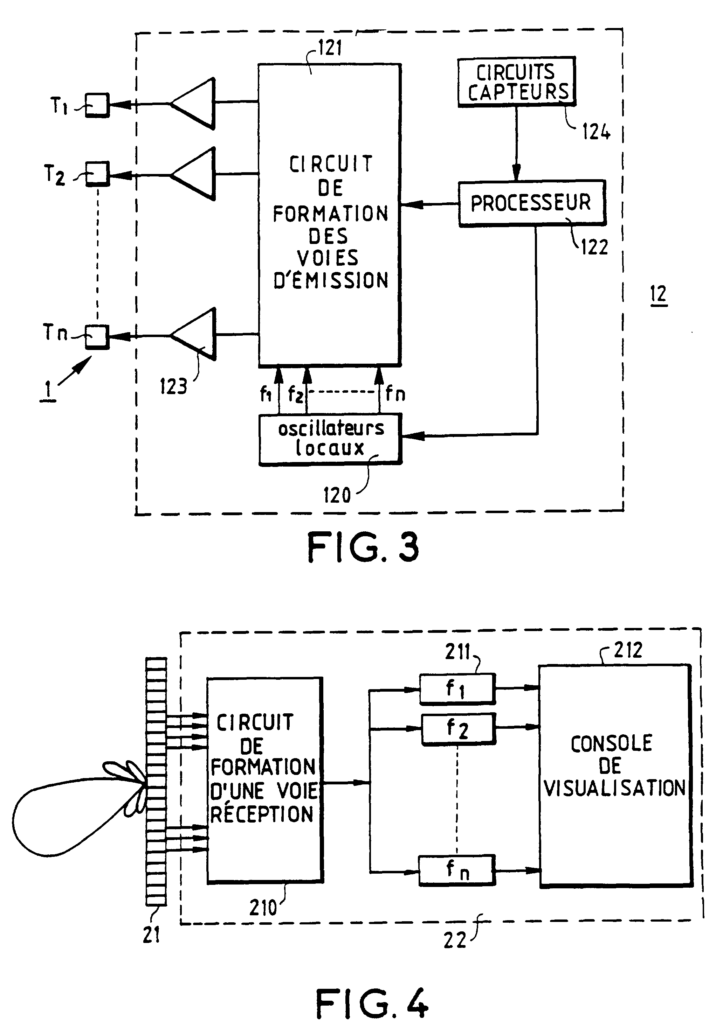

Le schéma synoptique des circuits d'émission 12 est représenté sur la figure 3. Ils comportent un ensemble 120 d'oscillateurs locaux aux fréquences $f_1$, $f_2$ ... $f_N$ dont les sorties sont reliées aux entrées correspondantes d'un circuit de formation de voies 121. Ce circuit comporte un ensemble de déphaseurs, une entrée de commande reliée à la sortie d'un processeur 122 et des sorties reliées à des amplificateurs de puissance 123. Le processeur 122 est également relié à l'ensemble d'oscillateurs locaux.

Les signaux de sortie des amplificateurs de puissance 123 sont appliqués aux transducteurs $T_1$, ... $T_N$ de l'antenne. La commande des déphasages pour la formation des voies d'émission est assurée par le processeur 122 recevant les paramètres de lacet, roulis, tangage issus de circuits capteurs 124 pour effectuer une stabilisation électronique des voies.

L'émission est donc formée d'un certain nombre de pinceaux fins adjacents insonifiant l'espace vers le fond de la mer sur un secteur gisement d'angle $\theta_E$. Chaque faisceau est particularisé par son code (i.e. sa fréquence) : l'émission est dite "colorée" en fréquence. Les directions des voies disposées en éventail couvrent le secteur d'angle $\theta_E$ avec des recouvrements à 3dB.

Suivant un mode de réalisation préféré, les circuits électroniques d'émission sont entièrement numériques. Pour cela, dans le circuit de formation des voies 121, le signal à émettre est d'abord enregistré dans des mémoires PROMs avec les retards ou déphasages nécessaires pour toutes les fréquences. L'entrée de chaque amplificateur de puissance est reliée à la sortie d'un convertisseur numérique analogique du circuit 121.

Le récepteur porté par le bateau est représenté sur la figure 4. Il comporte une antenne de réception large bande constituée d'au moins un hydrophone 21 de coefficient Q compatible avec la bande de fréquence à passer. Cette bande est déterminée par la résolution en distance souhaitée et elle est fonction des fréquences émises.

Avec cette antenne, on forme de manière classique une voie de réception spécialisée à lobe large en gisement par un circuit de formation de voie 210. La largeur angulaire $\theta_R$ du secteur de réception est déterminée pour obtenir, à la distance de détection, une zone de terrain suffisante pour couvrir le secteur insonifié.

Le signal reçu dans cette voie est ensuite filtré par un banc de filtres passe-bande 211 ; chaque filtre étant centré sur une des fréquences reçues. Par exemple, le banc de filtres est réalisé par transformation de Fourier rapide (FFT) du signal.

En ce qui concerne le doppler, il se traduit par un décalage des fréquences émises fonction des vitesses du bateau et du véhicule ROV et des directions d'émission et de réception. Ces données étant connues, les filtres sont asservis pour avoir toujours une fréquence centrale égale à la fréquence reçue.

Une console de visualisation 212 permet d'afficher à partir des signaux détectés une représentation de la zone insonifiée.

L'image est présentée à l'opérateur par exemple en XY chaque pixel ayant pour abscisse son numéro de voie et pour ordonnée la distance D du point de réflexion sur le fond par rapport au centre de phase de l'antenne d'émission 11.

Pour construire l'image, on utilise les informations de cap, distance et altitude du véhicule autonome ROV qui sont généralement connus, soit pour certains cas parce qu'ils sont fixes (altitude), soit parce qu'ils sont donnés par le sonar détecteur. On peut utiliser également la connaissance de l'instant d'émission pour s'affranchir de la connaissance de la distance ; cet instant est avantageusement connu à l'avance par le fait que l'émetteur et le récepteur, respectivement sur le ROV et le bateau sont munis d'horloges synchrones. Ces informations peuvent aussi être transmises par voie acoustique en équipant le ROV d'une balise génératrice d'impulsions sous-marines, codées de façon à transmettre le cap de l'émetteur (non représentée). La distance est déduite du temps de parcours du trajet direct.

Compte-tenu du fait que le bateau et le ROV sont les foyers d'une ellipsoïde dont on connaît le "parcours constant", (c'est-à-dire le parcours acoustique pour un temps donné) on en déduit les distances D.

Avec un sonar détecteur de coque à la fréquence de 200kHz et muni d'une antenne de 1,5m de longueur, la résolution sur le fond est de 1,5 mètre à 300 m de distance.

Avec le véhicule ROV on désire "classifier", c'est-à-dire pouvoir s'approcher à la distance de classification, $d_c$, ROV-objet.

Si $\Delta l$ est la résolution désirée sur le fond, la largeur du lobe de chaque voie à l'émission, à 3dB d'atténuation est $\alpha = \Delta l/d_c$.

La longueur L de l'antenne d'émission du ROV est alors donnée par $\alpha = 0,886c/fL$, f étant la fréquence de fonctionnement et c la vitesse du son dans l'eau.

Le nombre de voies formées N correspond au nombre de fréquences. Si B est la bande émise, la bande totale vaut N.B et le coefficient Q de chaque capteur de l'antenne de réception ne doit pas être inférieur à $f_{min}$/NB ($f_o$ étant choisie comme fréquence milieu, $f_{min}$ : $f_o$-NB/2),

On choisit donc un coefficient Q minimal qui soit réalisable pour fixer la bande totale NB, B déterminant la résolution en distance.

La résolution en distance dépend des orientations respectives de l'axe d'émission et de l'axe de réception. Lorsqu'ils sont alignés (cas du sonar monostatique), cette résolution vaut c/2B et lorsqu'ils sont perpendiculaires elle est voisine de c/B (en supposant distance ROV-bateau = distance bateau-objet) ; on prend par exemple c/1,5B pour évaluer la résolution en distance.

Pour fixer N et B, on considère par exemple que la résolution en distance $\Delta d$ doit être au moins égale à $\Delta l$.

Le secteur angulaire $\theta_E$ d'observation du ROV est alors déterminé par $\theta_E = N.\alpha$

Enfin le nombre de transducteurs $N_E$ de l'antenne d'émission est donné en imposant une distance d entre transducteurs telle que, comme indiqué ci-dessus, les lobes images soient hors du secteur insonifié, c'est-à-dire :

$$d \leq c/2f_{max}\sin(\theta_E/2)$$

Les fréquences d'émission sont équidistantes et telles que deux fréquences successives soient séparées d'au moins B.

Dans un exemple, les valeurs numériques suivantes ont été retenues :

- fréquence centrale : f = 200 kHz
- distance de classification : $d_c$ = 15 mètres
- résolution sur le fond : $\Delta l$ = 35 cm
- $\alpha = 1,34°$
- B = 2,86 kHz
- Q = 3
- N = 21
- $\theta_E = 28°$
- L = 29 cm
- d = 9 mm
- $N_E = 31$

La distance de Fresnel est calculée pour vérifier qu'elle est compatible avec la distance de classification. Si elle est trop grande, il est nécessaire de focaliser à l'émission. Avec un procédé numérique de commande d'émission, c'est-à-dire avec des transducteurs indépendants pilotés par des PROMS, cette focalisation est possible et permet donc de travailler à des distances très proches.

Cette focalisation peut être permanente si elle est légère car alors elle ne réduira pas les performances en détection sur écho. Avec les valeurs numériques indiquées pour l'exemple ci-dessus, la distance de Fresnel, vaut 11,2 mètres et donc il n'est pas nécessaire de focaliser.

Ces valeurs sont données à titre d'exemple. Notamment le véhicule autonome ROV peut s'approcher plus prés et donc identifier avec une meilleure résolution par exemple $\Delta l$ = 10cm pour $d_c$ = 5 mètres. Dans ce cas, la distance de Fresnel est telle qu'il faut légèrement focaliser à l'émission.

L'invention n'est pas limitée au mode de réalisation décrit et représenté. En particulier, une antenne d'émission dite à "phases alternées en quadrature" sur le ROV peut être utilisée. Chaque transducteur est décalé de $\P/2$ par rapport au précédent. Le lobe d'émission est alors un lobe image de direction $\theta$ telle que $\sin\theta = \lambda/4d$ variable avec la fréquence. En émettant successivement les fréquences dans des impulsions de durée 1/B, on obtient, comme précédemment, des voies à des fréquences différentes. Pour que la voie centrale d'émission à $f_o$ soit dans l'axe du ROV, l'antenne doit être placée inclinée de arcsin ($\lambda/4d$) pour la fréquence centrale $f_o$. Ceci n'est cependant pas obligatoire.

Par ailleurs, le codage en fréquence oblige à diviser la bande de fréquence de réception par le nombre de voies, ce qui présente l'inconvénient de limiter la résolution en distance. Une augmentation de la bande dans chaque voie conduirait à un trop faible secteur angulaire d'émission $\theta_E$.

Une première variante pour augmenter la bande B consiste à former des voies multiples à la réception pour séparer angulairement n groupes de fréquences identiques : ainsi en reprenant l'exemple précédent, trois groupes de sept fréquences différentes pour former les 21 voies d'émission sont alors émises ; à la réception trois voies sont formées en réception pour couvrir le secteur de réception $\theta_R$ au lieu d'une. Cette technique est limitée par le fait que la distance de classification doit rester suffisamment grande pour pouvoir séparer angulairement à la réception les voies de même fréquence. Ainsi avec l'exemple précédent, le sonar récepteur ne peut séparer au plus que 1,5m à 300 m de distance, ce qui limite le facteur n d'augmentation de la bande à une distance de classification $d_c$. Pour 15 mètres, n est limité à 1,5 N/$\Delta l$≃5..

Une deuxième solution pour augmenter la bande B consiste à effectuer un codage temporel. Pour cela le même signal est émis séquentiellement dans les directions des voies, l'émission étant directive en site pour limiter la durée de réponse. Les émissions des voies sont décalées une à une de cette durée et, à la réception, les signaux des voies sont séparés temporellement. La directivité en site est obtenue par une hauteur plus grande des transducteurs d'émission. Un codage mixte temps-fréquence peut également être mis en oeuvre.

A la réception, le système peut être complètement indépendant du sonar détecteur porté par le bateau en recevant sur un transducteur spécialisé (hydrophone) par exemple baffle. Il peut être remorqué.

Le système selon l'invention permet d'effectuer une imagerie acoustique "haute résolution" à des distances très grandes pour les fréquences utilisées, et ceci sans aucun problème de transmission de données.

Ce système peut être installé sans difficulté sur un petit véhicule autonome ROV puisque l'antenne d'émission est assez petite (29 cm à 200 kHz).

Enfin l'invention peut s'appliquer à un missile anti-mine (minekiller) : c'est un engin "aller-simple" qui porte une charge de destruction. Le véhicule étant consommable, le matériel embarqué doit être limité au maximum et de plus la résolution est d'autant meilleure que le véhicule se rapproche de la cible. Le système objet de l'invention est particulièrement bien adapté à cette application.

Un avantage de cette structure, avec émission multivoies colorées sur le véhicule autonome et, réception monovoie sur le bateau est que la résolution ne dépend pas de la distance bateau-zone insonifiée, ni de la distance bateau-véhicule autonome.

D'autre part, le bateau étant passif (seulement récepteur), ce système est très intéressant sur le plan de la sécurité, notamment pour une application en chasse aux mines.

Enfin le récepteur porté par le navire étant de préférence monovoie, il peut être à lobe large et ne nécessite pas de stabilisation. La seule contrainte est de diriger un hydrophone dans la direction approximative du véhicule. Cet hydrophone peut être monté sur l'antenne d'un sonar de chasse aux mines ou comme décrit ci-dessus utiliser un ou plusieurs des transducteurs de l'antenne du sonar déjà installé.

Tous les véhicules autonomes autopropulsés existants conviennent pour la mise en oeuvre de l'invention.

## Revendications

1. Système d'exploration des fonds marins comportant un véhicule sous-marin autonome (1) comportant des moyens d'émission sonar, associé à un bâtiment naval principal (2), caractérisé en ce que les moyens d'émission sonar sur le véhicule autonome comportent une antenne d'émission (11) et un ensemble de circuits électroniques (12) couplés à l'antenne (11) pour former une émission multivoies directives et codées dans un secteur gisement insonifié,

et en ce que des moyens de réception (21, 22) sont portés par le bâtiment principal et comportent des moyens de détection (21) pour former une voie de réception spécialisée à lobe large en gisement couplée à un ensemble de circuits de réception (22) comportant des moyens de séparation (211) des codes reçus.

2. Système selon la revendication 1, caractérisé en ce que les différents codes de voies sont des fréquences.

3. Système selon l'une des revendications 1 et 2, caractérisé en ce que l'antenne d'émission (11) portée par le véhicule autonome (1) est orthogonale à l'axe d'avancée du véhicule, l'axe central de la voie de réception formant avec l'axe d'avancée du véhicule autonome un angle compris entre -90° et +90°.

4. Système selon la revendication 2, caractérisé en ce que l'antenne d'émission comporte un ensemble de transducteurs alignés et équidistants, d'espacement choisi pour que les lobes images soient en dehors du secteur insonifié, les transducteurs étant commandés via un circuit de formation de voies (121) piloté par un processeur (122) par des signaux dont les phases et les fréquences suivent des lois prédéfinies, fonction des directions des voies d'émission à former aux différentes fréquences de code.

5. Système selon l'une des revendications 1 à 4, caractérisé en ce que les circuits électroniques d'émission sont des circuits numériques.

6. Système selon la revendication 1, caractérisé en ce que les circuits de réception (22) comportent un circuit de formation de voie réception lobe large (210) couplé aux moyens de séparation (211) dont les sorties sont reliées à une console de visualisation (212).

7. Système d'exploration des fonds marins comportant un véhicule sous-marin autonome (1) comportant des moyens d'émission sonar, associé à un bâtiment naval principal (2), caractérisé en ce que les moyens d'émission sonar sur le véhicule autonome comportent une antenne d'émission (11) et un ensemble de circuits électroniques (12) couplés à l'antenne (11) pour former une émission multivoies directives et codées dans un secteur gisement insonifié,

et en ce que des moyens de réception (21, 22) sont portés par le bâtiment principal et comportent des moyens de détection (21) pour former un nombre limité, typiquement inférieur ou égal à 5, de voies de réception spécialisées à lobe large en gisement, couplées à un ensemble de circuits de réception (22) comportant des moyens de séparation (211) des codes reçus, les mêmes groupes de codes étant utilisables dans des groupes de voies d'émission directives adjacentes.

8. Système selon la revendication 7, caractérisé en ce que les codes de voies étant des fréquences, un même ensemble de fréquences est utilisé à l'émission dans des groupes adjacents de voies adjacentes couvrant le secteur insonifié, les fréquences identiques associées à des voies d'émission différentes étant séparées spatialement par les voies lobe large de réception de directions différentes.

9. Système selon l'une des revendications 1 et 7 caractérisé en ce que la position du véhicule autonome est connue grâce à la goniométrie d'une balise fixée sur le véhicule autonome émettant une impulsion codée de façon à transmettre le cap de l'émetteur.

**Patentansprüche**

1. Explorationssystem für den Meeresgrund mit einem autonomen Unterseeboot (1), das Sonarsendemittel enthält und einem Hauptschiff (2) zugeordnet ist, dadurch gekennzeichnet, daß die Sonarsendemittel auf dem autonomen U-Boot eine Sendeantenne (11) und eine Gruppe von an die Antenne (11) gekoppelten elektronischen Schaltungen (12) aufweisen, um zahlreiche gerichtete und kodierte Strahlen in einem beschallten Azimutsektor auszusenden, und daß Empfangsmittel (21, 22) auf dem Hauptschiff montiert sind und Erfassungsmittel (21) enthalten, um einen spezialisierten Empfangskanal mit breiter Keule in Azimutrichtung zu bilden, der an eine Gruppe von Empfangsschaltungen (22) gekoppelt ist, welche Mittel (211) zur Trennung der empfangenen Kodes enthalten.

2. System nach Anspruch 1, dadurch gekennzeichnet, daß die verschiedenen Kanalkodes Frequenzen sind.

3. System nach einem der Ansprüche 1 und 2, dadurch gekennzeichnet, daß die Sendeantenne (11), die sich auf dem autonomen U-Boot (1) befindet, senkrecht zur Fortbewegungsachse des U-Boots liegt und daß die zentrale Achse des Empfangskanals mit der Fortbewegungsachse des autonomen U-Boots einen Winkel zwischen -90 und +90° einschließt.

4. System nach Anspruch 2, dadurch gekennzeichnet, daß die Sendeantenne eine Gruppe von fluchtenden und in gleichem Abstand angeordneten Transduktoren aufweist, deren Abstand so gewählt ist, daß die Bildkeulen außerhalb des beschallten Sektors liegen, und daß die Transduktoren über eine Kanalbildungsschaltung (121) gesteuert werden, die von einem Prozessor (122) durch Signale überwacht wird, deren Phasen und Frequenzen vorgebenen Gesetzen folgen, die von den Richtungen der bei den verschiedenen Kodefrequenzen zu bildenden Sendekanäle abhängt.

5. System nach einem der Ansprüche 1 bis 4, dadurch gekennzeichnet, daß die elektronischen Sendeschaltungen digitale Schaltungen sind.

6. System nach Anspruch 1, dadurch gekennzeichnet, daß die Empfangsschaltungen (22) eine Schaltung (210) zur Bildung einer breiten Empfangskeule aufweisen, die an die Trennmittel (211) gekoppelt sind, deren Ausgänge mit einem Anzeigepult (212) verbunden sind.

7. Explorationssystem für den Meeresgrund mit einem autonomen Unterseeboot (1), das Sonarsendemittel enthält und einem Hauptschiff (2) zugeordnet ist, dadurch gekennzeichnet, daß die Sonarsendemittel auf dem autonomen U-Boot eine Sendeantenne (11) und eine Gruppe von an die Antenne (11) gekoppelten elektronischen Schaltungen (12) aufweist, um zahlreiche gerichtete und kodierte Strahlen in einem beschallten Azimutsektor zu bilden, und daß Empfangsmittel (21, 22) auf dem Hauptschiff montiert sind und Erfassungsmittel (21) zur Bildung einer begrenzten Anzahl von spezialisierten Empfangskanälen, typisch höchstens fünf Kanäle, mit breiter Keule in Azimutrichtung aufweisen, die an eine Gruppe von Empfangsschaltungen (22) gekoppelt sind, welche Mittel (211) zur Trennung der empfangenen Kodes enthalten, wobei die gleichen Gruppen von Kodes in benachbarten Gruppen von gerichteten Sendekanälen verwendbar sind.

8. System nach Anspruch 7, dadurch gekennzeichnet, daß die Kanalkodes Frequenzen sind und eine Gruppe von Frequenzen auf der Sendeseite in benachbarten Gruppen von benachbarten Kanälen, die den beschallten Sektor überdecken, verwendet wird, wobei die identischen Frequenzen, die unterschiedlichen Sendekanälen zugeordnet sind, räumlich durch die Empfangskanäle unterschiedlicher Richtung mit breiter Keule voneinander getrennt werden.

9. System nach einem der Ansprüche 1 und 7, dadurch gekennzeichnet, daß die Lage des autonomen U-Boots aufgrund der Ortsbestimmung einer Bake bekannt ist, die auf dem autonomen U-Boot befestigt ist und einen kodierten Impuls aussendet, der den Kurs des Senders überträgt.

**Claims**

1. System for exploring the sea floor, including a self-contained underwater vehicle (1) including sonar transmission means and associated with a main naval ship (2), characterized in that the sonar transmission means on the self-contained vehicle include a transmission antenna (11) and a set of electronic circuits (12) coupled to the antenna (11) to form a directional and encoded multichannel transmission in an ensonified bearing sector,

   and in that reception means (21, 22) are carried by the main ship and include detection means (21) for forming a wide-lobed dedicated bearing reception channel coupled with a set of reception circuits (22) including means (211) for separating the codes received.

2. System according to Claim 1, characterized in that the various channel codes are frequencies.

3. System according to Claims 1 and 2, characterized in that the transmission antenna (11) carried by the self-contained vehicle (1) is orthogonal to the axis of advance of the vehicle, the centre axis of the reception channel forming an angle of between -90° and +90° with the axis of advance of the self-contained vehicle.

4. System according to Claim 2, characterized in that the transmission antenna includes a set of aligned and equidistant transducers, with a spacing chosen such that the image lobes are outside the ensonified sector, the transducers being controlled via a channel-forming circuit (121) operated by a processor (122) through signals whose phases and frequencies follow predefined laws, dependent on the directions of the transmission channels to be formed at the various code frequencies.

5. System according to Claims 1 to 4, characterized in that the electronic transmission circuits are digital circuits.

6. System according to Claim 1, characterized in that the reception circuits (22) include a wide-lobed reception channel-forming circuit (210) coupled to the separation means (211) whose outputs are connected to a viewing console (212).

7. System for exploring the sea floor, including a self-contained underwater vehicle (1) including sonar transmission means and associated with a main naval ship (2), characterized in that the sonar transmission means on the self-contained vehicle include a transmission antenna (11) and a set of electronic circuits (12) coupled to the antenna (11) to form a directional and encoded multichannel transmission in an ensonified bearing sector,

   and in that reception means (21, 22) are carried by the main ship and include detection means (21) for forming a limited number, typically less than or equal to 5, of wide-lobed dedicated bearing reception channels coupled to a set of reception circuits (22) including means (211) for separating the codes received, the same groups of codes being usable in groups of adjacent directional transmission channels.

8. System according to Claim 7, characterized in that the channel codes being frequencies, the same set of frequencies is used on transmission in adjacent groups of adjacent channels covering the ensonified sector, the identical frequencies associated with different transmission channels being separated spatially by the wide-lobed reception channels for different directions.

9. System according to one of Claims 1 and 7, characterized in that the position of the self-contained vehicle is known through the direction-finding of a beacon fixed on the self-contained vehicle transmitting a coded pulse so as to relay the heading of the transmitter.

FIG. 1

station de travail

bateau

lobe de la voie de réception

$\theta_E$

JOROV

$f_1, f_2, f_3 \ldots$

circuits électroniques d'émission

antenne

FIG. 2

EP 0 593 532 B1

FIG. 3

FIG. 4